# EUROPÄISCHE PATENTSCHRIFT

(11) **EP 4 422 890 B1**
(45) Veröffentlichungstag und Bekanntmachung des Hinweises auf die Patenterteilung: **04.02.2026**
(21) Anmeldenummer: 22751117.7
(22) Anmeldetag: 28.07.2022
(51) Int. Cl.: B60G 17/015, B60G 17/0165

(54) **VERFAHREN ZUM BETREIBEN EINES KRAFTFAHRZEUGS**
METHOD FOR OPERATING A MOTOR VEHICLE
PROCÉDÉ DE FONCTIONNEMENT D'UN VÉHICULE AUTOMOBILE

(30) Priorität: 28.10.2021 DE 102021128061
(43) Veröffentlichungstag der Anmeldung: 04.09.2024
(73) Patentinhaber: Audi AG, 85057 Ingolstadt (DE)
(72) Erfinder: MIHAILESCU, Adrian, 85049 Ingolstadt (DE)
(86) Internationale Anmeldenummer: PCT/EP2022/071224
(87) Internationale Veröffentlichungsnummer: WO 2023/072446

(56) Entgegenhaltungen:
- CN-A- 111 873 742
- DE-A1- 10 260 433
- DE-A1- 102018 220 664
- DE-A1- 102019 003 244
- DE-B3- 102020 111 502

## Beschreibung

Die Erfindung betrifft ein Verfahren zum Betreiben eines Kraftfahrzeugs gemäß der im Oberbegriff des Patentanspruches 1 angegebenen Art sowie ein Kraftfahrzeug gemäß dem Patentanspruch 5.

Heutzutage sind die Fahrbahnoberflächen vieler Straßen vielfach hochwertig und damit "topfeben" ausgeführt. Gleichzeitig sorgen die heutzutage verbauten Fahrwerke für einen sehr hohen Fahrkomfort mit sehr niedriger vertikaler Anregung des Fahrzeugaufbaus.

Insbesondere bei Fahrzeugen aus dem Premiumsegment, die in der Regel über aktive Fahrwerksysteme verfügen, ist das vertikale Fahrerlebnis extrem monoton, d.h. die Insassen spüren nahezu keine straßenbedingten Vibrationen oder Anregungen mehr und werden auch nicht mehr während der Fahrt "geschaukelt". Das ist ein Problem z.B. für Mütter und Väter, die die vertikale Anregung des Fahrzeugaufbaus nutzen möchten, um Babys und Kleinkinder während der Fahrt "in den Schlaf zu schaukeln". Zudem neigen übermüdete Fahrer oft dazu, bei einer monotonen Fahrt schneller am Steuer einzuschlafen. D.h., ein extrem komfortables Fahrwerk ist für den übermüdeten Fahrer von Nachteil.

Ein Verfahren zum Betreiben eines Kraftfahrzeugs ist in der DE 10 2019 003 244 A1 offenbart. Das offenbart Verfahren zeichnet sich dadurch aus, dass die während der Fahrt eines Kraftfahrzeugs auftretenden Wankbewegungen des Fahrzeugaufbaus auch im Stillstand des Kraftfahrzeugs beibehalten werden, um darin schlafende Insassen bei einer Unterbrechung der Fahrt, beispielsweise an einer Kreuzung, nicht aufzuwecken.

Ein gattungsgemäßes, die Merkmale des Oberbegriffes des Patentanspruches 1 aufweisendes Verfahren zum Betreiben eines Kraftfahrzeugs ist in der CN 111 873 742 A offenbart.

Aus der DE 10 2018 220 664 A1 ist ein Kraftfahrzeug mit einer Karosserie zur Aufnahme von Fahrzeuginsassen sowie mit einem Fahrwerk mit zumindest einer aktiven Fahrwerkskomponente bekannt. Die aktive Fahrwerkskomponente wird dabei in Abhängigkeit vom Betrieb einer in der Karosserie angeordneten Unterhaltungseinrichtung angesteuert, um das Unterhaltungserlebnis für die Insassen zu verbessern. Durch die gezielte Ansteuerung der Fahrwerkskomponente können Bewegungen, Erschütterungen oder andere Effekte erzeugt werden, die mit der Unterhaltungseinrichtung korrespondieren und so ein intensiveres Erlebnis ähnlich wie bei beweglichen Kinosesseln oder Fahrsimulatoren ermöglichen.

Aus der EP 3 303 025 B1 ist ein Verfahren zum Mäßigen von Reisekrankheit in einem Fahrzeug bekannt. Dabei wird die Bewegung zumindest eines Fahrzeugteils in einem bestimmten Frequenzbereich gesteuert. Abhängig vom Erfassen und Bewerten von Ereignissen oder Ereignismustern, die mit einer erhöhten Wahrscheinlichkeit für Reisekrankheit von Fahrzeuginsassen verbunden sind, wird der Bewegungsgrad angepasst. Hierzu wird ein aktives Aufhängungssystem mit Stellgliedern betrieben, um die Fahrzeugbewegung zwischen unterschiedlichen Betriebsmodi gezielt zu verändern und dadurch das Auftreten von Reisekrankheit zu vermindern.

Der Erfindung liegt die Aufgabe zugrunde, ein Verfahren zum Betreiben eines Kraftfahrzeugs gemäß der im Oberbegriff des Patentanspruches 1 angegebenen Art derart weiterzubilden, dass eine Erhöhung der Sicherheit im Straßenverkehr ermöglicht ist.

Diese Aufgabe wird durch die kennzeichnenden Merkmale des Patentanspruches 1 in Verbindung mit seinen Oberbegriffsmerkmalen gelöst.

Die Unteransprüche 2 bis 4 stellen vorteilhafte Weiterbildungen des erfindungsgemäßen Verfahrens dar.

Das Verfahren zeichnet sich dadurch aus, dass eine vertikale Ist-Anregung des Fahrzeugaufbaus des Kraftfahrzeugs bestimmt wird und die bestimmte Ist-Anregung mit einer hinterlegten Referenz-Anregung verglichen wird, wobei im Falle, dass die bestimmte Ist-Anregung kleiner als die hinterlegte Referenz-Anregung ist, die aktive Radaufhängung zum Stellen einer vertikalen Wankbewegung des Fahrzeugaufbaus freigeschaltet wird.

Lediglich der Vollständigkeit halber wird darauf hingewiesen, dass unter der Referenz-Anregung eine vertikale Anregung des Fahrzeugaufbaus zu verstehen ist, die der Fahrzeugaufbau bei einer Fahrt über eine Straße normalerweise erfährt. Die Referenz-Anregung kann dabei mittels Versuchen, z.B. Aufzeichnen der Anregung bei Fahrt des Kraftfahrzeugs über eine Straßen mit einer vorgegebenen/definierten Rauigkeit der Fahrbahnoberfläche, ermittelt werden. Denkbar ist aber auch, dass die Referenz-Anregung im realen Fahrbetrieb bestimmt wird.

Durch das Verfahren ist nunmehr in vorteilhafter Weise gewährleistet, dass eine - insbesondere für einen übermüdeten Fahrer potentiell gefährliche - Fahrsituation, nämlich ein monotones Dahingleiten auf einer "topfebenen" Fahrbahn, identifiziert werden kann und nach Identifizierung einer potentiell gefährlichen Fahrsituation, durch das Freischalten der aktiven Radaufhängung zum Stellen einer "künstlichen" vertikalen Wankbewegung, auch entsprechende Gegenmaßnahmen zur Verfügung gestellt werden. D.h., der Gefahr des Einschlafens eines übermüdeten Fahrers aufgrund einer zu geringen vertikalen Anregung des Kraftfahrzeugaufbaus kann aktiv entgegenwirkt werden, was wiederum zu einer Erhöhung der Sicherheit im Straßenverkehr beiträgt.

Neben der ausgeführten Erhöhung der Sicherheit im Straßenverkehr, kann das Verfahren selbstverständlich auch als Indikator für die Initiierung eines "Baby-bzw. Kleinkind-Schlafmodus" verwendet werden: D.h., auch Fahrsituationen, die aufgrund einer fehlenden vertikalen Anregung des Fahrzeugaufbaus ein gewünschtes "in den Schlaf Schaukeln" eines Babys- bzw. Kleinkinds erschweren bzw. ein Aufwachen eines bereits schlafenden Babys oder Kleinkinds zur Folgen haben könnten, können nunmehr proaktiv identifiziert werden, sodass durch das Freischalten der aktiven Radaufhängung zum Stellen einer entsprechenden vertikalen Anregung, ein Einschlafen bzw. Weiterschlafen des Babys bzw. Kleinkinds sichergestellt werden kann.

Ein weiterer Vorteil ist, dass - da insbesondere in Kraftfahrzeugen der Premiumklasse neben einer aktiven Radaufhängung in der Regel auch entsprechende Sensoren verbaut sind, mittels derer eine vertikale Anregung des Kraftfahrzeugaufbaus bestimmbar ist - eine kostengünstige und aufwandsarme Implementierung des erfindungsgemäßen Verfahrens ermöglicht ist.

Gemäß dem erfindungsgemäßen Verfahren wird das Stellen der vertikalen Wankbewegung so durchgeführt, dass ein vom Fahrer frei wählbarer Teilbereich des Fahrzeugaufbaus im Vergleich zum verbleibenden restlichen Bereich des Fahrzeugaufbaus verstärkt angeregt wird. Das hat den positiven Effekt, dass nunmehr ein gezielter Einsatz der vertikalen Anregung, beispielsweise vertikale Anregung lediglich im Bereich des Fahrersitzes, um einem Einschlafen des Fahrers entgegenzuwirken, oder auch z.B. Anregung des Bereiches der Rückbank und/oder des Beifahrersitz, um ein hier platziertes Baby "in den Schlaf zu schaukeln", ermöglicht ist. Erfindungsgemäß ist zudem vorgesehen, dass nach Freischaltung der aktiven Radaufhängung, das Stellen der vertikalen Wankbewegung des Fahrzeugaufbaus erst nach einer manuellen Aktivierung durch den Fahrer durchgeführt wird. D.h., der Fahrer aktiviert "per Knopfdruck" die aktive Radaufhängung, welche dann über eABC, aktive Dämpferregler oder dergleichen, die entsprechenden, eine Rollbewegung auf einer Straße nachbildenden vertikalen Anregungen erzeugt. Somit ist gewährleistet, dass die Fahrzeuginsassen vertikale Fahrbahnanregungen spüren, obwohl die Fahrbahn "topfeben" ist.

Um den Fahrer auf die entsprechenden Fahrsituationen hinzuwesen, wird bevorzugt während der Fahrt des Kraftfahrzeugs dem Fahrer ein Unterschreiten der hinterlegten Referenz-Anregung mittels eines optischen und/oder akustischen Signals mitgeteilt wird.

Vorzugsweise ist zudem vorgesehen, dass zum Stellen der vertikalen Wankbewegung des Fahrzeugaufbaus, die aktive Radaufhängung mit einem sinusförmigen, einer zufälligen oder einer eine reale Rollbewegung auf einer Straße nachbildeten Anregungsfrequenz angeregt wird.

Eine weitere bevorzugte Ausführungsform des erfindungsgemäßen Verfahrens sieht vor, dass die vertikalen Wankbewegung des Fahrzeugaufbaus sowohl in Bezug auf die Intensität als auch in Bezug auf die Frequenz vom Fahrer einstellbar ist.

Der Erfindung liegt des Weiteren die Aufgabe zugrunde, ein Kraftfahrzeug, welches eine aktive Radaufhängung, mittels derer jedes Rad einzeln mit vertikalen Kräften und/oder Hubbewegungen beaufschlagbar ist, sowie eine die aktive Radaufhängung regelnde/steuernde Regel-/Steuereinheit umfasst, derart weiterzubilden, dass neben hohen Fahrkomfort insbesondere auch eine erhöhte Sicherheit im Straßenverkehr sichergestellt ist.

Diese Aufgabe wird dadurch gelöst, dass die aktive Radaufhängung nach einem der Ansprüche 1 bis 4 betrieben wird und die Regel-/Steuereinrichtung eingerichtet ist, ein Verfahren nach einem der Ansprüche 1 bis 4 auszuführen.

Sämtliche Ausführungen zu dem erfindungsgemäßen Verfahren zum Betreiben eines Kraftfahrzeugs lassen sich analog auf das erfindungsgemäße Kraftfahrzeug übertragen, sodass mit diesem auch die zuvor genannten Vorteile erzielt werden.

## Patentansprüche

1. Verfahren zum Betreiben eines Kraftfahrzeugs, wobei das Kraftfahrzeug eine aktive Radaufhängung aufweist, mittels derer jedes Rad einzeln mit vertikalen Kräften und/oder Hubbewegungen beaufschlagbar ist, wobei
eine Ist-Anregung Fahrzeugaufbaus des Kraftfahrzeugs bestimmt wird und die bestimmte Ist-Anregung mit einer hinterlegten Referenz-Anregung verglichen wird, wobei im Falle das die bestimmte Ist-Anregung kleiner als die hinterlegte Referenz-Anregung ist, die aktive Radaufhängung zum Stellen einer vertikalen Wankbewegung des Fahrzeugaufbaus freigeschaltet wird,
**dadurch gekennzeichnet, dass**
das Stellen der vertikalen Wankbewegung so durchgeführt wird, dass ein Teilbereich des Fahrzeugaufbaus im Vergleich zum verbleibenden Bereich des Fahrzeugaufbaus verstärkt angeregt wird und dass nach Freischaltung der aktiven Radaufhängung, das Stellen der vertikalen Wankbewegung des Fahrzeugaufbaus erst nach einer manueller Aktivierung durch den Fahrer durchgeführt wird.

2. Verfahren nach Anspruch 1,
**dadurch gekennzeichnet, dass**
während der Fahrt des Kraftfahrzeugs ein Unterschreiten der hinterlegten Referenz-Anregung mittels einem optischen und/oder akustischen Signal mitgeteilt wird.

3. Verfahren nach Anspruch 1 oder 2,
**dadurch gekennzeichnet, dass**
zum Stellen der vertikalen Wankbewegung des Fahrzeugaufbaus die aktive Radaufhängung mit einem sinusförmigen, einer zufälligen oder einer eine reale Rollbewegung auf einer Straße nachbildenden Anregungsfrequenz angeregt wird.

4. Verfahren nach Anspruch 1 oder 2,
**dadurch gekennzeichnet, dass**
die vertikale Wankbewegung des Fahrzeugaufbaus in Bezug auf Intensität und Frequenz einstellbar ist.

5. Kraftfahrzeug, umfassend eine aktive Radaufhängung, mittels derer jedes Rad einzeln mit vertikalen Kräften und/oder Hubbewegungen beaufschlagbar ist sowie eine die aktive Radaufhängung regelnde/steuernde Regel-/Steuereinheit, wobei
die aktive Radaufhängung geeignet ist, nach einem der Ansprüche 1 bis 4 betrieben zu werden und die Regel-/Steuereinheit eingerichtet ist,
ein Verfahren nach einem der Ansprüche 1 bis 4 auszuführen.

## Claims

1. A method for operating a motor vehicle, wherein the motor vehicle has an active wheel suspension, by means of which each wheel can individually be subject to vertical forces and/or lifting movements, wherein
an actual excitation of the vehicle body of the motor vehicle is determined and the determined actual excitation is compared with a stored reference excitation, wherein, if the determined actual excitation is smaller than the stored reference excitation, the active wheel suspension is activated to adjust a vertical rolling movement of the vehicle body,
**characterized in that**
the vertical roll movement is set in such a way that one part of the vehicle body is excited more strongly than the remaining part of the vehicle body and that, after the active wheel suspension has been activated, the vertical roll movement of the vehicle body is only adjusted after manual activation by the driver.

2. The method according to claim 1,
**characterized in that**
while the motor vehicle is in motion, a drop below the stored reference excitation is communicated by means of a visual and/or acoustic signal.

3. The method according to claim 1 or 2,
**characterized in that**
in order to set the vertical roll movement of the vehicle body, the active wheel suspension is excited with a sinusoidal excitation frequency that simulates a random or real rolling motion on a road.

4. The method according to claim 1 or 2,
**characterized in that**
the vertical roll movement of the vehicle body can be set with reference to intensity and frequency.

5. A motor vehicle, comprising an active wheel suspension, by means of which each wheel can be subject individually to vertical forces and/or lifting movements, and a regulating/control unit, which regulates/controls the active wheel suspension, wherein
the active wheel suspension is suitable for operation according to any one of claims 1 to 4, and the regulating/control unit is configured to execute a method according to any one of claims 1 to 4.

## Revendications

1. Procédé de fonctionnement d'un véhicule automobile, dans lequel le véhicule automobile présente une suspension de roue active, au moyen de laquelle chaque roue peut être soumise individuellement à des forces verticales et/ou à des mouvements de levage, dans lequel
une excitation réelle de la carrosserie du véhicule automobile est déterminée et l'excitation réelle déterminée est comparée à une excitation de référence enregistrée, dans lequel dans le cas où l'excitation réelle déterminée est inférieure à l'excitation de référence enregistrée, la suspension de roue active est activée pour régler un mouvement de roulis vertical de la carrosserie,
**caractérisé en ce que**
le réglage du mouvement de roulis vertical est réalisé de sorte qu'une zone partielle de la carrosserie est soumise à une excitation plus forte que le reste de la carrosserie du véhicule et qu'après activation de la suspension de roue active, le réglage du mouvement de roulis vertical de la carrosserie n'est réalisé qu'après une activation manuelle par le conducteur.

2. Procédé selon la revendication 1,
**caractérisé en ce que**
pendant la conduite du véhicule automobile, un sous-dépassement de l'excitation de référence enregistrée est communiqué au moyen d'un signal optique et/ou acoustique.

3. Procédé selon la revendication 1 ou 2,
**caractérisé en ce que**
pour régler le mouvement de roulis vertical de la carrosserie, la suspension de roue active est excitée avec une fréquence d'excitation sinusoïdale, aléatoire ou reproduisant un mouvement de roulis réel sur une route.

4. Procédé selon la revendication 1 ou 2,
**caractérisé en ce que**
le mouvement de roulis vertical de la carrosserie est réglable en termes d'intensité et de fréquence.

5. Véhicule automobile comprenant une suspension de roue active, au moyen de laquelle chaque roue peut être soumise individuellement à des forces verticales et/ou à des mouvements de levage, ainsi qu'une unité de régulation/commande régulant/commandant la suspension de roue active, dans lequel
la suspension de roue active est adaptée pour fonctionner selon l'une quelconque des revendications 1 à 4 et l'unité de régulation/commande est configurée pour mettre en œuvre un procédé selon l'une quelconque des revendications 1 à 4.
